# EUROPÄISCHE PATENTANMELDUNG

(11) **EP 3 085 527 A1**
(43) Veröffentlichungstag der Anmeldung: **26.10.2016**
(21) Anmeldenummer: 16151769.3
(22) Anmeldetag: 19.01.2016
(51) Int. Cl.: B32B 7/00, B32B 7/02, B32B 25/00, B32B 25/04, B32B 27/00, B32B 27/06, B32B 27/08, B32B 27/30, B32B 27/32, B32B 1/00, B32B 1/08

(54) **MEHRSCHICHTIGER FLEXIBLER SCHLAUCH**

(30) Priorität: 22.04.2015 DE 102015207303
(71) Anmelder: ContiTech MGW GmbH, 34346 Hannoversch-Münden (DE)
(72) Erfinder: Laue, Christian, 99880 Waltershausen (DE); Kehr, Ute, 99880 Waltershausen (DE); Kling, Rene, 99887 Petriroda (DE); Trott, Michael, 99880 Waltershausen (DE)
(74) Vertreter: Preusser, Andrea

(57) **Zusammenfassung**

Die Erfindung betrifft einen mehrschichtigen flexiblen Schlauch (10), insbesondere für Kältemittel, Flüssigkeiten und Gase.

Für eine niedrige Permeationsrate bei gleichzeitig guten akustischen Eigenschaften enthält der Schlauch (10) wenigstens eine erste Folie als eine erste Barriereschicht (1) und eine Zwischenschicht (2) auf der Basis wenigstens eines elastomeren Werkstoffs und wenigstens eine weitere Folie als zweite Barriereschicht (3), wobei sich die Zwischenschicht (2) in direktem Kontakt zu der ersten Barriereschicht (1) und in direktem Kontakt zu der zweiten Barriereschicht (3) befindet.

## Beschreibung

Die Erfindung betrifft einen mehrschichtigen flexiblen Schlauch, insbesondere für Kältemittel, Flüssigkeiten und Gase.

Kraftstoffführende Leitungen, welche als starre Rohre ausgebildet sind, sind bspw. bereits aus DE 4414955C1 oder DE 35 10 395A1 bekannt. Derartige starre Rohre entsprechen allerdings nicht mehr den modernen Anforderungen an Kraftstoffschläuche. Hier haben sich in den letzten Jahren, insbesondere im Automobilbereich, flexible Schläuche durchgesetzt, bei denen wenigstens eine Schicht auf der Basis eines elastomeren Werkstoffs ist.
Diese flexiblen Schläuche werden zum Transport von Flüssigkeiten, insbesondere von flüchtigen Flüssigkeiten, oder Gasen zumeist mit zumindest einer Sperrschicht versehen. So werden bspw. flexible Kältemittelschläuche, insbesondere für CO₂ als Kältemittel, mit einer Sperrschicht mit niedriger Permeationsrate ausgestattet. Die Sperrschicht wird dabei insbesondere auf der Innenseite der Innenschicht als "Inliner" angebracht. Diese Sperrschicht besteht aus Kunstharzen (z.B. Phenolharzen) oder aus Folien aus Polyamid (PA) oder einem Copolymer auf Basis von Ethylenvinylalkohol (EVOH). Auch Folienverbundwerkstoffe, beispielsweise ein PA-EVOH-Folienverbund, kommen hier zum Einsatz.
Kraftstoffschläuche und Chemikalienschläuche werden ebenfalls mit einer Sperrschicht in Form eines "Inliners" ausgestattet, und zwar insbesondere auf der Basis fluorhaltiger Kunststoffe, wobei Polytetrafluorethylen (PTFE) besonders zu nennen ist.
Die oben genannten Schlauchtypen zeichnen sich zwar durch niedrige Permeationsraten gegenüber dem zu transportierenden Medium aus, haben aber gleichzeitig meist schlechte akustische Eigenschaften.

Die Motorengeräusche eines Fahrzeuges werden immer leiser bzw. bei Elektrofahrzeugen verschwindet das Motorengeräusch komplett. Dadurch kommen die Geräusche anderer Bauteile, wie bspw. Kompressoren, Pumpen etc., im Fahrzeug immer mehr zum Vorschein. Insofern wird den akustischen Eigenschaften der einzelnen Bauteile eines Fahrzeugs sowohl von Kunden als auch von Herstellerseite aus immer mehr Bedeutung beigemessen.

Die Aufgabe der vorliegenden Erfindung besteht somit darin, einen Schlauch, insbesondere für Kältemittel, Flüssigkeiten und Gase, bereitzustellen, sich durch eine niedrige Permeationsrate bei gleichzeitig guten akustischen Eigenschaften auszeichnet. Darüber hinaus soll der Schlauch eine hohe Flexibilität, eine hohe Schwingungsdämpfung und ausgezeichnete dynamische Eigenschaften aufweisen.

Gelöst wird diese Aufgabe dadurch, dass der Schlauch wenigstens eine erste Folie als eine erste Barriereschicht und eine Zwischenschicht auf der Basis wenigstens eines elastomeren Werkstoffs und wenigstens eine weitere Folie als zweite Barriereschicht enthält, wobei sich die Zwischenschicht in direktem Kontakt zu der ersten Barriereschicht und in direktem Kontakt zu der zweiten Barriereschicht befindet.

Überraschenderweise hat sich gezeigt, dass eine derartige Schlauchkonstruktion sich nicht nur durch eine niedrige Permeationsrate auszeichnet, sonder auch gute akustische Eigenschaften liefert. Überraschend ist auch, dass sich trotz des Vorhandenseins von nunmehr zwei Folien als zwei separate Barriereschichten keine Einbußen in der Flexibilität und Schwingungsdämpfung zeigen.

Die Folie für die erste und für die zweite Barriereschicht besteht bevorzugt jeweils aus einem thermoplastischen Material. Die Folie für die erste und für die zweite Barriereschicht kann gleich oder verschieden voneinander sein. Die erste und / oder die zweite Barriereschicht kann hierbei einlagig oder mehrlagig, bevorzugt zweilagig, ausgebildet sein, wobei die einzelnen Lagen gleich oder verschieden voneinander sein können.

In einer bevorzugten Ausführungsform beträgt die Gesamt-Schichtdicke der ersten und / oder der zweiten Barriereschicht über alle Lagen zwischen 0,1 und 0,4 mm. Die Folie für die beiden Barriereschichten kann jeweils aus folgenden Materialien bestehen: thermoplastische Polyolefinharze, z.Bsp. hoch-dichtes Polyethylen (HDPE), Polyethylen mit ultrahoher Molmasse (UHMWPE), oder Polypropylen (PP) oder thermoplastisches Ethylen-Propylen-Copolymerharz oder thermoplastische Polyamidharze, wie etwa Nylon 6 (N6), Nylon 66 (N66), Nylon 46 (N46), Nylon 11 (N11), Nylon 12 (N12), Nylon 610 (N610), Nylon 612 (N612), Nylon 6/66-Copolymer (N6/66), Nylon 6/66/610- Copolymer (N6/66/610), Nylon MXD6 (MXD6), Nylon 6T, Nylon 6/6T-Copolymer, Nylon 66/PP- Copolymer, Nylon 66/PPS-Copolymer, oder Vinylacetat (EVA) oder Polyvinylalkohol (PVA) oder Vinylalkohol-/Ethylen-Copolymer (EVOH) oder Polyvinylidenchlorid (PVDC) oder Polyvinylchlorid (PVC) oder Vinylchlorid-/Vinylidenchlorid-Copolymer oder Vinylidenchlorid-/Methacrylat-Copolymer. Eine besonders gute chemische Resistenz gegenüber Kältemitteln bieten hierbei Nylon6 , Nylon 66 und EVOH. Die Folie kann auch als Hybrid, d.h. aus einer Mischform der genannten Materialien, ausgebildet sein.

Der Schlauch enthält zusätzlich noch wenigstens eine Zwischenschicht. Die Zwischenschicht kann aus folgenden Materialien aufgebaut sein: Chloroprenkautschuk (CR), oder Nitrilkautschuk ((H-)NBR) oder Ethylen-Propylenkautschuk (EPM) oder Ethylen-Propylen-Dien-Kautschuk (EPDM) oder Butylkautschuke (IIR, CIIR, BIIR) oder chlorsulfonierter Polyethylenkautschuk (CSM) oder Ethylen-Acrylkautschuk (AEM) oder chlorierter Polyethylenkautschuk (CPE) oder bromiertes Isobutylen-Paramethylstyrol (BIMS) oder thermoplastischen Elastomere oder thermoplastische Vulkanisate, wie etwa Polypropylen, Polyethylen oder andere Polyolefine, gemischt mit EPDM, IIR, NBR oder Acrylkautschuk.
Besonders bevorzugt sind IIR,CIIR, BIIR und BIMS aufgrund der besonders guten Permeationseigenschaften und Medienbeständigkeit.

Die genannten können jeweils alleine oder im Verschnitt eingesetzt werden. Die Zwischenschicht enthält in der Regel noch weitere Mischungsingredienzien umfassend wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Fasern, Farbpigmente). Diesbezüglich wird auf den allgemeinen Stand der Kautschukmischungstechnologie verwiesen.

In einer bevorzugten Ausführungsform enthält der Schlauch zusätzlich noch wenigstens eine Schicht bestehend aus Festigkeitsträgern. Der Festigkeitsträger kann durch Flechten, spiralförmiges Wickeln, Stricken, Wirken oder schraubenförmiges Wirken von Garn oder durch Gewebeeinlagen gebildet werden. Das Garn kann aus herkömmlichen Schlauchverstärkungsgarnen, wie etwa Glas-, Stahl-, Baumwolle-, Polyester-, Polyvinylacetat oder Aramidfasern oder einer Mischung jeder dieser Fasern gebildet werden.
Zur Erzielung einer besonders guten Druckbeständigkeit haben sich Polyester- und / oder Aramidfasern als besonders gut geeignet erwiesen.

Die Festigkeitsträgerschicht kann entweder einlagig oder zweilagig ausgebildet sein.

Des Weiteren enthält der erfindungsgemäße Schlauch in der Regel noch eine Außenschicht. Die die Außenschicht basiert, ebenso wie die Zwischenschicht, insbesondere auf einer vulkanisierten Kautschukmischung, umfassend wenigstens eine Kautschukkomponente und Mischungsingredienzien. Als Kautschukkomponenten sind insbesondere zu nennen: Ethylen-Propylen-Mischpolymerisat (EPM), Ethylen-Propylen-Dien-Mischpolymerisat (EPDM), Nitrilkautschuk (NBR), (teil)hydrierter Nitrilkautschuk (HNBR), Fluor-Kautschuk (FPM bzw. FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Butadien-Kautschuk (BR), Chloriertes Polyethylen (CM), Chlorsulfoniertes Polyethylen (CSM), Polyepichlorhydrin (ECO), Ethylen-Vinylacetat-Kautschuk (EVA), Acrylat-Kautschuk (ACM), Siliconkautschuk (MVQ), Fluorierter Methylsilikonkautschuk (MFQ), Perfluorkautschuk (FFPM oder FFKM), Polyurethan (PU). Von besonderer Bedeutung sind: EPDM, CM, FKM bzw. FPM, ECO, CR und NBR
Auch der Einsatz eines Verschnittes, insbesondere in Verbindung mit einem der vorgenannten Kautschuktypen, ist möglich. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Fasern, Farbpigmente). Auch hier wird diesbezüglich auf den allgemeinen Stand der Kautschukmischungstechnologie verwiesen.

Vorteilhaft ist es, wenn die einzelnen Schichten des Schlauches so ausgewählt werden, dass die untereinander eine Verbindung eingehen und einen Haftverbund bilden. Hierzu kann gegebenenfalls auch auf chemische Hilfsmittel, wie bspw. der Einsatz eines Haftvermittlers oder eines Ätzmittels zum Anätzen, oder auch physikalische Möglichkeiten, wie bspw. Strahlenbehandlung, etc, zurückgegriffen werden.

Der Schlauch ist z.B. für die Saug- und Druckseite von Klimaanlagen universell einsetzbar. Durch Veränderungen im Fertigungsverfahren können auch geformte Schlauchstücke hergestellt werden.

Die Erfindung wird nun anhand eines Ausführungsbeispieles unter Bezugnahme auf zwei schematische Zeichnungen erläutert.

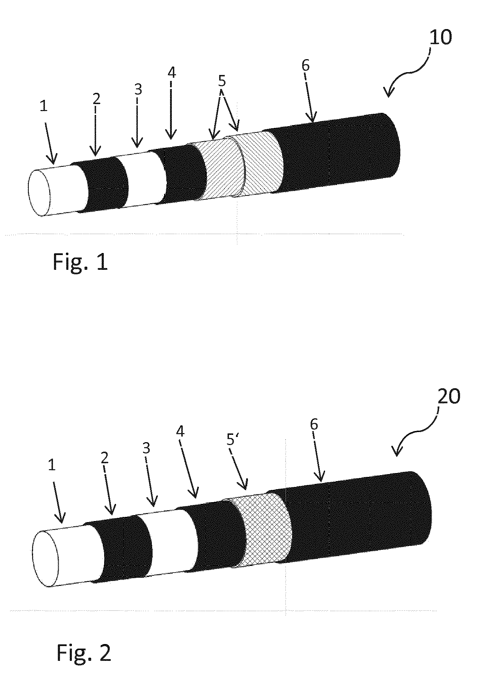

Figur 1 zeigt einen erfindungsgemäßen Schlauch 10 mit folgendem Schichtenaufbau:
   - Erste Barriereschicht 1 in Form einer Thermoplast-Folie oder einem Verbund aus verschiedenen Thermoplast-Folien;
   - Erste Zwischenschicht 2 aus einem elastomeren Werkstoff;
   - Zweite Barriereschicht 3 in Form einer Thermoplast-Folie oder einem Verbund aus verschiedenen Thermoplast-Folien;

   - Zweite Zwischenschicht 4 aus einem elastomeren Werkstoff;
   - Zweilagige Festigkeitsträgerschicht 5;
   - Außenschicht 6 aus einem elastomeren Werkstoff, die gegen äußere Einflüsse schützt.
Figur 2 zeigt einen erfindungsgemäßen Schlauch 20 mit folgendem Schichtenaufbau:
   - Erste Barriereschicht 1 in Form einer Thermoplast-Folie oder einem Verbund aus verschiedenen Thermoplast-Folien;
   - Erste Zwischenschicht 2 aus einem elastomeren Werkstoff;
   - Zweite Barriereschicht 3 in Form einer Thermoplast-Folie oder einem Verbund aus verschiedenen Thermoplast-Folien;
   - Zweite Zwischenschicht 4 aus einem elastomeren Werkstoff;
   - Einlagige Festigkeitsträgerschicht 5';
   - Außenschicht 6 aus einem elastomeren Werkstoff, die gegen äußere Einflüsse schützt.

## Patentansprüche

1. Mehrschichtiger flexibler Schlauch (10, 20), enthaltend wenigstens eine erste Folie als eine erste Barriereschicht (1) und eine Zwischenschicht (2) auf der Basis wenigstens eines elastomeren Werkstoffs und wenigstens eine weitere Folie als zweite Barriereschicht (3), wobei sich die Zwischenschicht (2) in direktem Kontakt zu der ersten Barriereschicht (1) und in direktem Kontakt zu der zweiten Barriereschicht (3) befindet.

2. Mehrschichtiger flexibler Schlauch (10, 20) nach Anspruch 1, **dadurch gekennzeichnet, dass** die Folie für die erste Barriereschicht (1) und die Folie für die zweite Barriereschicht (3) auf der Basis wenigstens eines thermoplastischen Materials sind.

3. Mehrschichtiger flexibler Schlauch (10, 20) nach Anspruch 1 oder 2, **dadurch gekennzeichnet, dass** die Folie für die erste Barriereschicht (1) und die Folie für die zweite Barriereschicht (2) gleich oder verschieden voneinander sind.

4. Mehrschichtiger flexibler Schlauch (10, 20) nach einem der Ansprüche 1 bis 3, **dadurch gekennzeichnet, dass** der Schlauch zusätzlich noch wenigstens eine Schicht bestehend aus Festigkeitsträgern (5, 5') enthält.

5. Mehrschichtiger flexibler Schlauch (10, 20) nach Anspruch 4, **dadurch gekennzeichnet, dass** die Festigkeitsträgerschicht einlagig (5') oder zweilagig (5) ausgebildet sein kann.
